# EUROPEAN PATENT APPLICATION

(11) **EP 1 516 692 A1**
(43) Date of publication of application: **23.03.2005**
(21) Application number: 03761829.5
(22) Date of filing: 27.06.2003
(51) Int. Cl.: B23K 26/20

(54) **METHOD OF LASER WELDING**

(30) Priority: 27.06.2002 JP 2002188769
(71) Applicant: National Institute for Materials Science, Tsukuba-shi, Ibaraki 305-0047 (JP)
(72) Inventor: KURODA, Seiji, National Inst. for Materials Sci., Tsukuba-shi, Ibaraki 305-0047 (JP); FUKUSHIMA, T., National Inst. for Material Sci., Tsukuba-shi, Iraki 305-0047 (JP); TSUKAMOTO, S., National Inst. for Material Sc, Tsukuba-shi, Ibaraki 305-0047 (JP); ARAKANE, G., National Inst. for Materials Sc., Tsukuba-shi, Ibaraki 305-0047 (JP)
(74) Representative: Calamita, Roberto
(86) International application number: PCT/JP2003/008207
(87) International publication number: WO 2004/002671

(57) **Abstract**

In a laser welding method, the invasion of atmosphere gas into a molten metal and the occurrence of welding defects are prevented by coating a material having a high affinity for the atmosphere gas on the back surface of a work and therefore it is possible for a large output laser to easily weld a thick plate by employing a simple method.

## Description

### Technical Field

The present invention relates to a laser welding method, and more particularly, to a laser welding method capable of preventing the occurrence of welding defects even if thick plates are welded.

### Background Art

A recent increase in the output of laser oscillators raises expectations to the welding of thick plates. However, defects such as porosity and solidification cracking are liable to occur due to an increase in the thickness of plates because key holes (holes in molten metal formed by a laser) are made unstable. In particular, when welding is executed passing through the thickness of a plate, a problem arises in that, gas atoms (mainly nitrogen and oxygen) in the atmosphere are absorbed into a molten metal from the back surface of the plate and discharged again in the interior of the plate as gas, and this gas is made to porosity. Further, when bubbles are formed in the molten metal by the invasion of the gas thereinto, a solidifying shape is disturbed and solidification cracking is liable to occur.

As known means for solving the above problems, there are 1) a technology of shielding the molten metal by spraying inert gas from a back surface, and 2) a technology of forming an alloy metal that contain an element with a high affinity for oxygen and nitrogen (for example, Al) in a material, causing the alloy metal to react with the gas atoms absorbed in the molten metal, and discharging reaction products as slags such as oxides, nitrides and the like. However, the method 1) is disadvantageous in that a gas shielding nozzle must be disposed below a work and that welding beads are disturbed because shield gas is sucked in the welding beads, thereby solidification cracking is liable to occur, and the method 2) is disadvantageous in that since the composition of a material is varied, other characteristics (corrosion resistance, mechanical characteristics, and the like) of the material are affected by metal alloy.

The present inventors have found that welding defects can be effectively prevented by a simple method in various studies which have been executed from the standpoint that it is important to develop an effective and high quality welding technology taking advantage of materials in the process of developing a fine-grained high strength steel and the standpoint that it is an important point to prevent defects such as porosity and solidification cracking in the process of developing a high quality thick plate welding technology using a laser having a large output power.

According to the laser welding method of the present invention, since the invasion of gas atoms into a molten metal can be prevented by applying the coating of an element having a high affinity for atmosphere gas to the back surface of a work, any shield gas is not necessary and further it is not necessary to change the composition of the material of the work, thereby the above problems can be solved at once.

### Disclosure of Invention

The present invention provides a laser welding method for preventing the occurrence of welding defects by blocking the invasion of atmosphere gas into a molten metal by coating a material having a high affinity for the atmosphere gas on the back surface of a work in laser welding (claim 1).

Further, the present invention provides a laser welding method in which any one of aluminum, silicon, titanium, alloys containing at least one of these elements, and mixtures of these elements is selected as the coating material having the high affinity for the atmosphere gas (claim 2) and also provides a laser welding method in which any one processing of spraying the material having the high affinity for the atmosphere gas, bonding an adhesive tape of the material, and coating the powder of the material is selected as technique for coating on the back surface of a work(claim 3).

### Brief Description of Drawings

Fig. 1 shows results of observation of welded portions by a laser penetration welding of test pieces to which different coating was given and recorded by a micro-focusing X-ray radiographic apparatus, in which (a) shows a result of observation of a test piece of which the back surface is not subjected to any treatment, (b) shows that of a test piece to which aluminum is sprayed, and (c) shows that of a test piece having an aluminum adhesive tape bonded on the back surface thereof.
FIG. 2 is a view showing the outline of the micro-focusing X-ray radiographic apparatus.
FIG. 3 is a graph showing a result of experiment executed as to oxygen and nitrogen contained in a molten metal.
FIG. 4 is a graph showing a result of experiment executed as to the thickness of an aluminum coating necessary to suppress porosity in laser welding.
FIG. 5 is a graph showing a result of experiment executed as to the relationship between the amount of nitrogen contained in the molten metal and the incidence of porosity.

Note that the reference numerals in the figures denote the following apparatus, devices, material, portions and the like.
- 1: micro-focusing X-ray radiographic apparatus
- 2: moving table
- 3: laser beams
- 4: reflection mirror
- 5: parabolic converging mirror
- 6: micro-focusing X-ray tube
- 7: image intensifier
- 8: high speed camera for recording image
- 9: test piece
- 9a: front surface
- 9b: back surface
- L: laser device
- KH: key holes
- P: porosity

### Best Mode for Carrying Out the Invention

According to the present invention, there is provided a laser welding method having an object of obtaining a sound welded portion without defects by suppressing (blocking) the invasion of atmosphere gas into the molten pool (molten metal) of a base metal by coating a material having a high affinity for the atmosphere gas to the back surface of a work in laser penetration welding to thereby prevent the occurrence of porosity (welding defects) in a welded portion, and this method is effective to weld thick sheets by a laser having a large output power and the like.

As to the relationship between the atmosphere gas and the coating material applied to the back surface of the work, when the atmosphere gas is the atmospheric air, since nitrogen and oxygen are gas components liable to be absorbed into steel, aluminum having a high affinity for these gas components is selected. In addition to the aluminum, a simple body of silicon, titanium, etc. is selected as well as alloys containing one of silicon, titanium, etc. and mixtures of them are also selected as materials that contain an element having a high affinity in a sufficient concentration.

Further, when the atmosphere gas is a carbon dioxide gas, aluminum, silicon, titanium, alloys containing at least one of these elements, and mixtures of them are selected likewise. Further, according to the present invention, there is also provided a laser welding method which can be obtained by spray coating a material having a high affinity for the atmosphere gas, for example, aluminum, bonding an aluminum adhesive tape, or coating aluminum powder to the back surface of the work as the coating modes of the material having the high affinity for the atmosphere gas.

Note that when the aluminum powder is coated, the object can be treated with a coating fluid that is convenient as if it is a paint by mixing the aluminum powder with a solvent such an organic solvent, water, and the like.

The method and the treatment described above can be applied similarly regardless of whether the single body of silicon, titanium, etc. is selected or the alloys containing at least one of aluminum, silicon, and titanium or the mixtures of these elements are selected as the materials containing the element having the high affinity in a sufficient concentration.

The present invention will be described below in more detail with reference to an embodiment.

### Embodiment

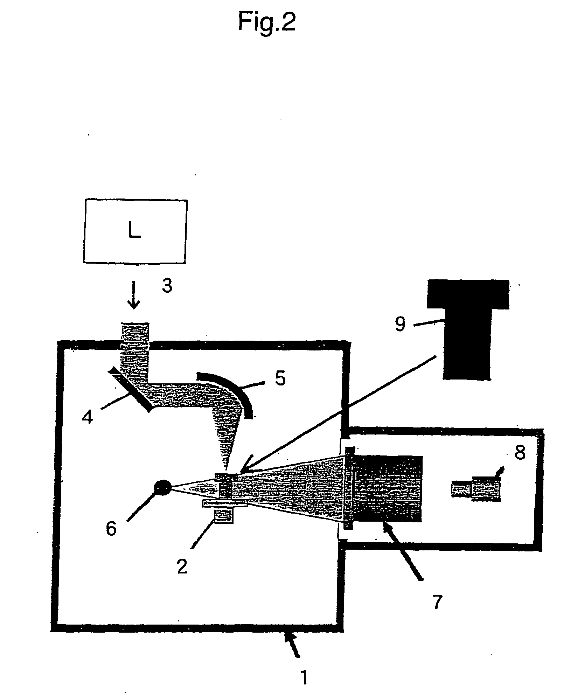

FIG. 2 shows a schematic view of a micro-focusing X-ray radiographic apparatus (1) which irradiates X-rays to a test piece (9) from its side face in laser penetration welding and observes a welded portion by recording the image displayed on an image intensifier (7) with a high speed camera (8).

The micro-focusing X-ray radiographic apparatus (1) includes a moving table (2) on which the test piece (9) to be fluoroscoped with X-rays is set, a reflection mirror (4) and a parabolic converging mirror (5) which converge the laser beams (LB) from a laser device (L) onto the upper surface of the test piece (9) and irradiate the laser beams to the test piece (9), a micro-focusing X-ray tube (6) for irradiating the X-rays to the test piece (9) from the side thereof, the image intensifier (7) for displaying an image obtained by irradiating the X-rays to the test piece (9) from the micro-focusing X-ray tube (6), and the high speed camera (8) for recording the image of the image intensifier (7).

In an embodiment of the present invention, the test piece (9) of an ordinary weldable steel SM490A having a thickness of 15 mm was subjected to penetration welding by the 20 kw laser device (L), and, at the same time, a welded portion was observed using the micro-focusing X-ray radiographic apparatus (1) when the penetration welding was executed. To observe the test piece (9), X-rays were irradiated from the side of the test piece (9) in a direction perpendicular to the laser beam axis and the welding line, and the image displayed on the image intensifier (7) was recorded with the high speed camera (8) at a rate of 1000 frames/sec.

The test piece (9) was formed of a shape composed of a 5 mm high upper portion having a thickness of 12 mm and a 10 mm lower portion having a thickness of 8 mm so that an increase in temperature of the test piece (9) could be suppressed as far as possible and the welded portion could be easily observed. As the test piece (9), there were prepared three types of test pieces (9), i.e. a test piece (9) whose back surface (9b) was not treated, test pieces (9) having 50 and 100 micron aluminum films formed on the back surfaces (9b) thereof by plasma spraying respectively, and a test piece (9) having an aluminum adhesive tape (0.1 mm thick) bonded on the back surfaces (9b) thereof.

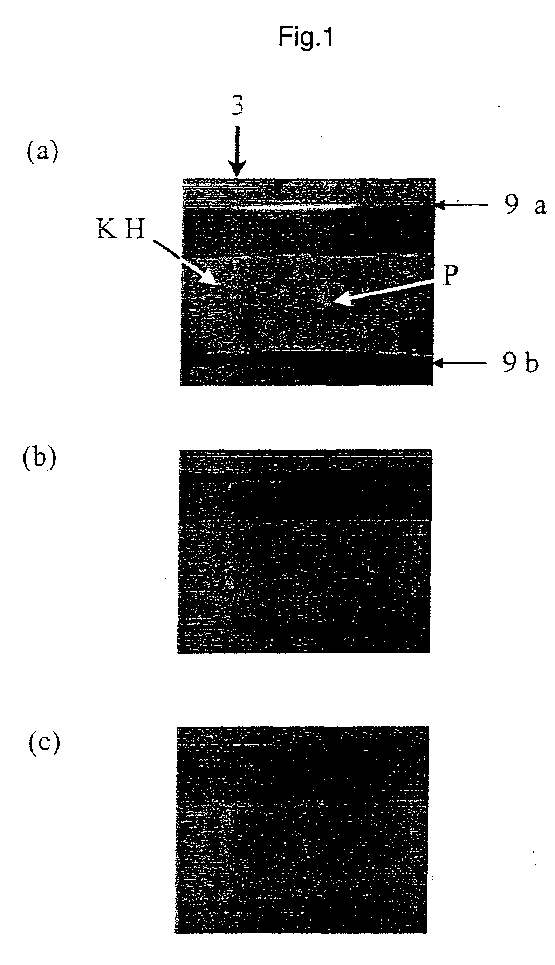

FIG. 1 shows the images of the respective welded portions, which were recorded by the micro-focusing X-ray radiographic apparatus (1), of a) the test piece (9) whose back surface (9b) was not treated, b) the test piece (9) whose back surface (9b) was sprayed with aluminum (50 microns), c) the test piece (9) whose back surface (9b) was bonded with the aluminum adhesive tape when the laser penetration welding was executed. Note that welding conditions were such that a laser output was set to 20 kw, a welding speed was set to 100 cm/min, Just Focus (the laser beams (LB) were converged on front surface (9a) of the test piece (9)), front surface (9a) was shielded with a He gas at 50 L/min, and no back shield gas was used.

According to a result of observation of FIG. 1, although (a) shows a result of observation of the test piece whose back surface (9b) is not subjected to any treatment, it can be observed that a large amount of bubbles are generated from the vicinity of a molten pool at positions of about 2 to 3 mm behind key holes (KH) on the back surface (9b). When the bubbles remain without being discharged until the molten pool is solidified, porosity (P) will be formed.

In contrast, it is exhibited that (b) the test piece (9) whose back surface (9b) is sprayed with the aluminum and (c) the test piece (9) having the aluminum adhesive tape bonded on the back surface (9b) thereof can perfectly prevent the occurrence of porosity (P) from the back surface (9b) thereof by the reaction of the aluminum with the gas.

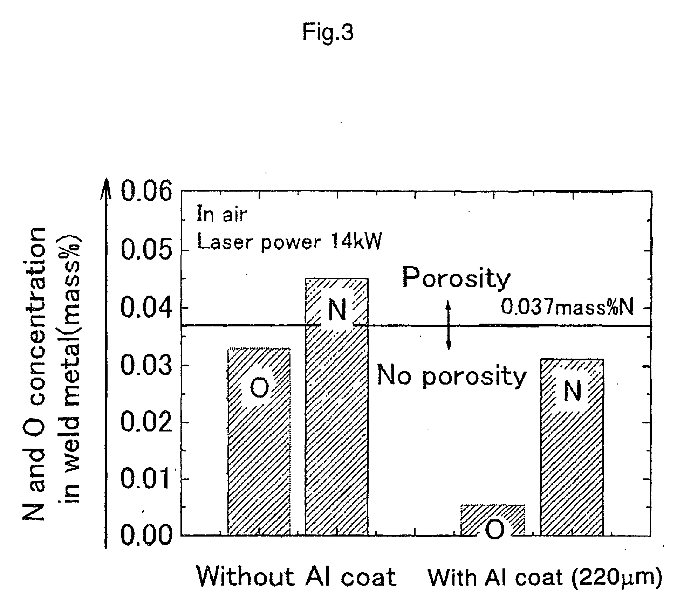

According to a result of analysis of the oxygen and nitrogen in the weld metal shown in FIG. 3, when no aluminum is coated, bubbles are generated in the weld metal, remains there, and forms porosity because the content of nitrogen in the weld metal exceeds the critical value. In contrast, when aluminum is coated on a bottom surface in a thickness of 220 µm, since the content of nitrogen in the weld metal can be suppressed to below the critical value, the occurrence of porosity can be prevented.

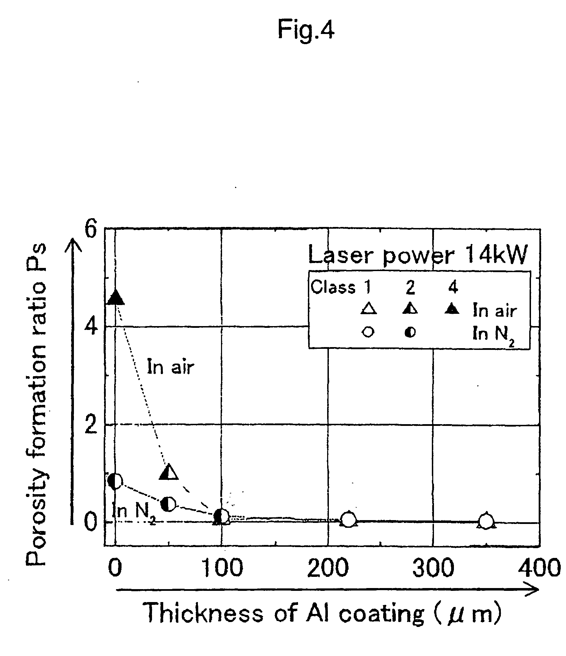

When an experiment was executed as to the thickness of an aluminum coating necessary to suppress porosity in the laser welding, a result shown in FIG. 4 was obtained. In the experiment, however, the thickness was measured more precisely using an X-ray stationary image under the experiment conditions of a plate thickness set to 11 mm and a laser output set to 14 kw. According to the result of the experiment, the aluminum coating is necessary in the thickness of at least 200 µm to perfectly prevent the porosity as shown in a vertical axis of FIG. 4 which shows the incidence of porosity by a sectional area (mm) of porosity per unit welding length. In this embodiment, there was a possibility that very fine porosity remained because they were observed by an X-ray moving image, and thus the thickness of the aluminum coating was set to 50 µm. In this case, the incidence of porosity was 1 in spite of that the aluminum coating was made in the thickness of only 50 µm in comparison with the incidence of porosity of 4.8 in a known case in which no aluminum coating was made, that is, the incidence was greatly reduced to 20% of the known incidence. When porosity were observed using X-ray stationary image as in the case of FIG. 4, they could be observed more precisely, and thus it has been found that the aluminum coating of 200 µm or more is necessary when it is required to more perfectly prevent the occurrence of porosity under the above welding conditions.

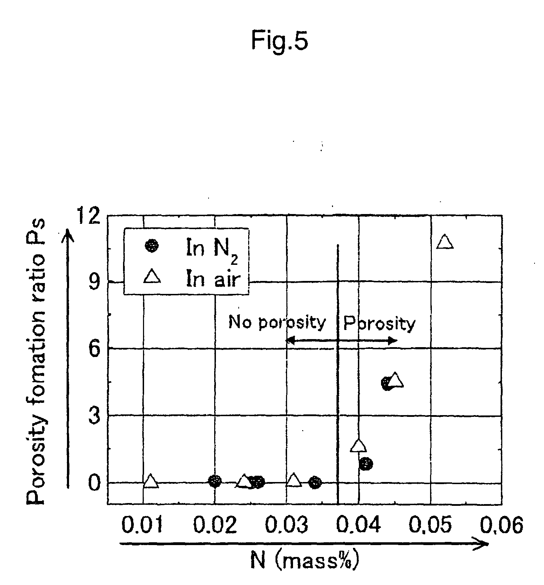

Note that a result shown FIG. 5 was obtained in an experiment as to the relationship between the amount of nitrogen in the weld metal and the incidence of porosity. According to the experiment, porosity are generated regardless of the difference of the atmospheres of the back surface when the amount of nitrogen in the weld metal increases to a certain critical value (0.037 mass%) or more.

As described above, according to the embodiment, in the laser penetration welding, the occurrence of porosity (P) in a welded portion can be perfectly prevented by coating aluminum, which is a material having a high affinity for atmosphere gas, on the back surface of a work, and, in this case, a base metal attests to the fact that the atmosphere gas is prevented from invading into a molten metal.

### Industrial Applicability

According to the present invention explained above, since thick sheets can be easily welded by the laser having the large output and joined portions without defects can be obtained, it is possible to dramatically extend the application of laser welding to the fields of bridges, construction, ship building, and the like in which welded thick plates are used.

The laser penetration welding has a great economic effect because it can achieve a large advantage by the very simple method of coating a material having a very high affinity for atmosphere gas on the back surface of a work, the material also including a material containing an element having a high affinity for the atmosphere gas in an amount of a sufficient concentration.

## Claims

1. A laser welding method, wherein the occurrence of welding defects can be prevented by blocking the invasion of atmosphere gas into a molten metal by coating a material having a high affinity for the atmosphere gas on the back surface of a work in laser welding.

2. The laser welding method according to claim 1, wherein any one of aluminum, silicon, titanium, alloys containing at least one of these elements, and mixtures of these elements are selected as the coating material having the high affinity for the atmosphere gas.

3. The laser welding method according to claim 2, wherein any one processing of spraying the material having the high affinity for the atmosphere gas, bonding an adhesive tape of the material, and coating the power of the material is selected for coating the material on the back surface of the work.
